# EUROPÄISCHE PATENTANMELDUNG

(11) **EP 4 566 793 A1**
(43) Veröffentlichungstag der Anmeldung: **11.06.2025**
(21) Anmeldenummer: 24213555.6
(22) Anmeldetag: 18.11.2024
(51) Int. Cl.: B29C 49/42, B29C 49/78, B29C 49/66, B29C 49/10, B29C 49/36

(54) **VERFAHREN UND VORRICHTUNG ZUM HERSTELLEN UND VORZUGSWEISE ABFÜLLEN VON BEHÄLTERN**

(30) Priorität: 05.12.2023 DE 102023133905
(71) Anmelder: KHS GmbH, 44143 Dortmund (DE)
(72) Erfinder: Fritsche, Claas, 44143 Dortmund (DE); Jakob, Timo, 44143 Dortmund (DE); Lewin, Frank, 44143 Dortmund (DE)

(57) **Zusammenfassung**

Die Erfindung betrifft ein Verfahren zum Herstellen und vorzugsweise Abfüllen von Behältern (2), insbesondere Flaschen, aus thermoplastischem Kunststoff, wobei das Verfahren folgende Schritte aufweist: Herstellen der Behälter (2) durch Blasformen; Abkühlen der Behälter (2), insbesondere durch Beaufschlagung an ihrer Behälteraußenseite mit einem insbesondere flüssigen Kühlmedium (16), wobei das Verfahren folgende Schritte aufweist: Messen der Temperatur der Behälter (2), insbesondere der Temperatur an einer Innenwandung des Behälterbodens (2.2), nach dem Abkühlen der Behälter (2).

Ferner betrifft die Erfindung eine Vorrichtung zum Herstellen und vorzugsweise Abfüllen von Behältern (2).

## Beschreibung

### Technisches Gebiet

Die Erfindung betrifft ein Verfahren zum Herstellen und vorzugsweise Abfüllen von Behältern, insbesondere Flaschen, aus thermoplastischem Kunststoff, vorzugsweise PET (Polyethylenterephthalat). Ferner betrifft die Erfindung eine Vorrichtung zum Herstellen und vorzugsweise Abfüllen, insbesondere kombiniertem Herstellen und Abfüllen, von entsprechenden Behältern.

### Stand der Technik

Verfahren und Vorrichtungen, insbesondere auch in verblockter Form, zum Herstellen und anschließendem Abfüllen von flüssigen Produkten in Behälter sind grundsätzlich bekannt. Derartige Verfahren bzw. Vorrichtungen sind beispielsweise aus der DE 10 2006 053 193 A1 oder der DE 43 26 601 A1 bekannt.

Das Herstellen der Behälter, insbesondere PET-Behälter, erfolgt üblicherweise durch Blasformen. Hierbei werden vorerhitzte Vorformlinge (Preforms) unter Hitze zu Behältern verarbeitet. Die die Blasformmaschine im heißen Zustand verlassenden Behälter können nicht direkt befüllt werden. Vielmehr müssen diese unmittelbar nach ihrer Herstellung durch Kühlmaßnahmen so weit gekühlt und stabilisiert werden, dass sie sich mit einem flüssigen Produkt befüllen lassen. Da es sich bei dem flüssigen Produkt oftmals um CO₂-haltige Produkte handelt, welche unter Vorspannung abgefüllt werden, stellen sich folglich erhöhte Anforderungen an die mechanische Stabilität der zuvor unmittelbar hergestellten PET-Behälter.

Um ein ausreichendes Abkühlen der hergestellten Behälter zu erreichen, ist es bekannt, diese von außen mit einem Kühlmedium zu besprühen. Ein derartiges Verfahren und eine Vorrichtung sind beispielsweise aus der EP 2 956 288 B1 bekannt. Dort wird ein flüssiges Kühlmedium, dem ein Desinfektionsmittel beigemischt ist, auf die hergestellten Behälter gesprüht.

Allerdings kommt es bei den aus dem Stand der Technik bekannten Vorrichtungen und Verfahren dazu, dass die hergestellten Behälter nicht ausreichend gekühlt werden. Nach dem Abfüllen entstehen, insbesondere auch durch den Druck bzw. die Vorspannung der CO₂-haltigen Produkte, Spannungsrissen in den Behältern. Die von derartigen Spannungsrissen betroffenen Behälter verlieren ihr Füllgut oft erst, nachdem diese bereits palettiert und eingelagert sind und verunreinigen so den Lagerbestand.

### Darstellung der Erfindung

Der Erfindung liegt daher die Aufgabe zu Grunde, ein Verfahren zum Herstellen und vorzugsweise Abfüllen von Behältern anzugeben, das die oben genannten Probleme und Nachteile des Standes der Technik ausräumt. Insbesondere ist es Aufgabe der Erfindung, ein Verfahren anzugeben, bei dem es zu weniger bzw. keinen undichten Behältern kommt. Ferner ist es Aufgabe der vorliegenden Erfindung, eine entsprechende Vorrichtung anzugeben, die ebenfalls die obengenannten Probleme des Standes der Technik ausräumt.

Diese Aufgaben werden durch die Gegenstände der unabhängigen Ansprüche gelöst. Weitere mögliche Ausgestaltungen der Erfindung sind insbesondere in den abhängigen Ansprüchen angegeben.

Die erfindungsgemäße Lösung besteht insbesondere darin, ein Verfahren zum Herstellen und vorzugsweise Abfüllen von Behältern, insbesondere Flaschen, aus thermoplastischem Kunststoff, vorzugsweise PET, anzugeben. Das Verfahren weist einen Schritt zum Herstellen durch Blasformen, insbesondere durch Streckblasen auf. Ferner weist das Verfahren einen Schritt zum Abkühlen der hergestellten Behälter auf. Beim Abkühlen werden die Behälter, insbesondere an ihrer Behälteraußenseite, von einem Kühlmedium beaufschlagt. Bei dem Kühlmedium handelt es sich insbesondere um ein flüssiges Kühlmedium, vorzugsweise in Form von Wasser.

Erfindungsgemäß weist das Verfahren einen Schritt zum Messen der Temperatur der Behälter nach dem Abkühlen der Behälter auf. Dabei wird beim Messen der Temperatur der Behälter, insbesondere die Temperatur an einer Innenwandung des Behälterbodens, gemessen.

Behälter sind ganz grundsätzlich einstückig oder aus mehreren fest miteinander verbundenen Teilen ausgebildet. Vorzugsweise weist jeder Behälter im Inneren einen Hohlraum auf. Die Wände, die diesen Hohlraum begrenzen sind die Innenwandungen des Behälters. Der Behälter ist dazu ausgebildet, den gebildeten Hohlraum von der Umgebung abzutrennen. Bei dem Behälter kann es sich beispielsweise um Behälter zum Aufbewahrung von Lebensmitteln und insbesondere flüssigen Produkten handeln. Besonders bevorzugt sind die Behälter Flaschen. Im Folgenden erfolgt daher häufig eine Beschreibung am Beispiel von Flaschen. Selbstverständlich sind die dort beschriebenen Aspekte auch auf andere Arten von Behälter ausweitbar.

Beim Blasformen erfolgt das Herstellen der Behälter aus Vorformlingen, auch Preforms genannt. Üblicherweise weist hierbei der Mündungs- oder Verschlussbereich des Vorformlings bereits die endgültige Gestalt auf. Beim Blasformen kann es sich um Extrusionsblasformen handeln, bei dem aus einem Schlauch aus heißem formbaren Kunststoff der Behälter geformt wird. Das geschieht dann in der Art und Weise, dass der Schlauch in ein zugehöriges Werkstück senkrecht nach unten ausgestoßen bzw. extrudiert wird.

Vorzugsweise handelt es sich jedoch bei dem Blasformen um Streckblasen. Beim Streckblasen wird der Vorformling erwärmt, in einer Kavität gehalten und von dieser umschlossen. Anschließend fährt ein Dorn von oben in den Vorformling ein und Druckluft wird in den Vorformling gepresst, wodurch dieser aufgeblasen und an die Kontur des Blaswerkzeugs bzw. der Kavität angepresst wird. Auf diese Weise lässt sich die Form einer gewünschten Kunststoffflasche vorgeben.

Die durch Blasformen unter Erhitzen hergestellten leeren Behälter, insbesondere Flaschen, besitzen direkt nach der Herstellung üblicherweise eine Temperatur von über 70 °C. Typische Temperaturen liegen zwischen 75 °C und 80 °C, die Temperaturen können in Einzelfällen jedoch bis zu 90 °C betragen.

Vor dem Abfüllen bzw. Befüllen der Behälter müssen die Behälter auf eine Temperatur abgekühlt werden, bei der der für die Behälter verwendete thermoplastische Kunststoff eine ausreichende Stabilität aufweist. Beispielsweise müssen hierbei die Behälter auf 55 °C oder niedriger abgekühlt werden.

Nur wenn die Behälter auf eine Temperatur abgekühlt worden sind, bei der diese eine ausreichende Stabilität aufweisen, ist gewährleistet, dass bei den Behältern später keine Spannungsrisse entstehen. Derartige Spannungsrisse treten häufig erst nach der Abfüllung und Drucküberlagerung auf, wenn die Behälter palettiert und eingelagert sind. Als Folge verlieren die von Spannungsrissen, auch Stresscracks genannten, betroffenen Behälter ihr Füllgut und verunreinigen den restlichen Lagerbestand.

Erfindungsgemäß weist das Verfahren daher einen Schritt zum Messen der Temperatur der Behälter auf. Dabei wird insbesondere die Temperatur nach dem Abkühlen der Behälter gemessen bzw. überprüft. Insbesondere wird hierbei überprüft, ob die Temperatur der Behälter niedriger ist als eine Temperatur, bei der die Behälter eine ausreichende Stabilität aufweisen, beispielsweise eine Temperatur von maximal 55 °C.

Hierdurch kann sichergestellt werden, dass die Temperatur der Behälter vor dem Abfüllen niedrig genug ist, um Spannungsrisse zu verhindern.

Insbesondere erfolgt das Messen der Temperatur an einer Innenwandung des Behälterbodens. Am Behälterboden liegt üblicherweise eine vergrößerte

Wandstärke vor, die dazu führt, dass die Temperatur an dieser Stelle besonders lange gehalten wird. Somit ist der Behälterboden üblicherweise der Bereich des Behälters, der zuletzt ausreichend abkühlt. Da außerdem insbesondere die Innenwand des Behälterbodens gemessen wird und das Abkühlen von der Behälteraußenseite erfolgt, kann bei einer ausreichend niedrigen Temperatur der Innenwandung des Behälterbodens davon ausgegangen werden, dass der Behälter insgesamt weit genug abgekühlt ist.

Gemäß einer vorteilhaften Weiterbildung der Erfindung weist das Verfahren einen Schritt zum Messen der Temperatur der Behälter vor dem Abkühlen der Behälter auf. Auch hier wird insbesondere die Temperatur an einer Innenwandung des Behälterbodens gemessen.

Die vor dem Abkühlen der Behälter gemessene Temperatur kann als Eingangswert für die benötigte Kühlleistung beim Abkühlen der Behälter verwendet werden. So lässt sich ein optimiertes Abkühlen der Behälter erreichen, bei der die Kühlleistung gerade so hoch eingestellt wird, dass diese ausreicht, die Behälter ausreichend abzukühlen. Hierdurch kann im Prozess entsprechend Energie und Kühlmedium gespart werden.

Besonders bevorzugt erfolgt ein Messen der Temperatur der Behälter vor dem Abkühlen der Behälter und nach dem Abkühlen der Behälter. So lässt sich der Kühlprozess optimal einstellen und nachregeln. Grundsätzlich wäre es jedoch auch denkbar, nur nach dem Abkühlen der Behälter oder nur vor dem Abkühlen der Behälter die Temperatur der Behälter zu messen.

Bei einer vorteilhaften Weiterbildung der Erfindung weist das Verfahren einen Schritt zum Anpassen der Kühlleistung beim Abkühlen auf. Insbesondere weist das Verfahren einen Schritt zum Anpassen der Temperatur und/oder des Massenstroms des Kühlmediums auf. Vorzugsweise erfolgt das Anpassen basierend auf der gemessenen Temperatur. Bei der Temperatur kann es sich hierbei sowohl um die Temperatur vor dem Abkühlen der Behälter, als auch um die Temperatur nach dem Abkühlen der Behälter handeln. Besonders bevorzugt erfolgt das Anpassen basierend auf der gemessenen Temperatur nach dem Abkühlen und vor dem Abkühlen der Behälter.

Mit anderen Worten wird die Kühlleistung, d. h. die Temperatur und/oder der Massenstrom des Kühlmediums basierend auf der gemessenen Temperatur gesteuert und/oder geregelt.

In einer beispielhaften Ausführung wird über die vor dem Abkühlen der Behälter gemessene Temperatur als Eingangswert die benötigte Kühlleistung zum Abkühlen der Behälter berechnet und das Kühlmedium entsprechend angepasst. Über die nach dem Abkühlen der Behälter gemessene Temperatur wird der Abkühlvorgang kontrolliert und ggf. ein Regelungsprozess zur Korrektur der Kühlleistung durchgeführt.

Unabhängig hiervon kann beim Anpassen der Kühlleistung auch auf historische Messdaten zurückgegriffen werden.

Ganz allgemein weist das Kühlmedium eine Temperatur von deutlich unter 55 °C, beispielsweise eine Temperatur von maximal 25 °C, vorzugsweise maximal 20 °C auf.

Gemäß einer vorteilhaften Weiterbildung der Erfindung weist das Verfahren einen Schritt zum Befüllen der Behälter mit einem insbesondere flüssigen Produkt auf. Hierbei handelt es sich nicht einschränkend um CO₂-haltige Produkte, die unter Vorspannung abgefüllt werden, also eine unmittelbar zur Verfügung stehende ausreichende Stabilität der hergestellten Behälter erfordern, damit sie nicht beim Füllvorgang beschädigt werden.

Vorzugsweise erfolgt das Abkühlen direkt zwischen dem Herstellen der Behälter und dem Befüllen der Behälter. Genauer erfolgt das Abkühlen während eines Transfers von einer Blasformmaschine zum Herstellen der Behälter, zu einer Füllmaschine zum Befüllen der Behälter.

Das bedeutet, dass die Abkühlung so weit erfolgt und durchgeführt wird, dass sich der abgekühlte Behälter unmittelbar in der Füllmaschine mit dem gewünschten Produkt befüllen lässt.

Ferner wird die Aufgabe mittels einer Vorrichtung zum Herstellen und vorzugsweise Abfüllen, insbesondere kombiniertem Herstellen und Abfüllen, von Behältern, insbesondere Flaschen, aus thermoplastischem Kunststoff, vorzugsweise PET, gelöst. Vorzugsweise dient die Vorrichtung zur Durchführung eines der vorab beschriebenen Verfahren. Daher sind hier sämtlich einzelnen Aspekte und Vorteile der vorab beschriebenen Verfahren übertragbar.

Die Vorrichtung weist eine Blasformmaschine zum Herstellen, insbesondere Blasformen, von Behältern auf. Die Blasformmaschine ist also dazu ausgebildet, mittels Blasformen, insbesondere Streckblasen, Behälter herzustellen. Ferner weist die Vorrichtung eine Füllmaschine zum Befüllen der hergestellten Behälter mit einem insbesondere flüssigen Produkt auf. Die Füllmaschine ist also dazu ausgebildet, die insbesondere mittels der Blasformmaschine hergestellten Behälter zu befüllen. Ferner weist die Vorrichtung eine Transferstrecke zwischen der Blasformmaschine und der Füllmaschine auf. Die in der Blasformmaschine hergestellten Behälter durchlaufen somit die Transferstrecke, um zu der Füllmaschine zu gelangen.

Die Transferstrecke weist eine Kühlvorrichtung zum Abkühlen der hergestellten Behälter auf. Die Kühlvorrichtung ist also dazu ausgebildet, die hergestellten Behälter abzukühlen, d. h. deren Temperatur zu senken. Ferner weist die Transferstrecke zumindest eine Temperaturmesseinrichtung zum Messen der Temperatur der Behälter, und zwar insbesondere zum Messen der Temperatur der Behälter an einer Innenwandung des Behälterbodens, auf. Die Temperaturmesseinrichtung ist also dazu ausgebildet, die Temperatur der Behälter, insbesondere einer Innenwandung des Behälterbodens, zu messen.

Wie auch bereits bei dem Verfahren beschrieben, kann durch das Messen der Temperatur der Behälter sichergestellt werden, dass bei den Behältern keine

Spannungsrisse auftreten. Insbesondere kann verhindert werden, dass am Behälterboden bzw. am Flaschenboden Spannungsrisse auftreten.

Gemäß einer vorteilhaften Weiterbildung der Erfindung weist die Temperaturmesseinrichtung ein Pyrometer auf.

Mittels Pyrometers kann die Temperatur der Behälter, insbesondere der Innenwandung des Behälterbodens, kontaktfrei, d. h. berührungslos gemessen werden. Hierdurch sind sehr schnelle Messungen bei bewegten Messobjekten möglich.

Bei einer vorteilhaften Weiterbildung der Erfindung ist die Temperaturmesseinrichtung über, d. h. oberhalb den auf der Transportstrecke transportierten Behältern angeordnet. Auf der Transportstrecke werden die Behälter mit ihrer Behälteröffnung nach oben, und ihrem Behälterboden nach unten transportiert. Entsprechend ist die Temperatur der Innenwandung des Behälterbodens durch eine obere Behälteröffnung, insbesondere Flaschenmündung, hindurch messbar.

Gemäß einer vorteilhaften Weiterbildung der Erfindung weist die Transferstrecke zwei Temperaturmesseinrichtungen auf. Vorzugsweise ist eine vordere Temperaturmesseinrichtung vor der Kühlvorrichtung, und eine hintere Temperaturmesseinrichtung hinter der Kühlvorrichtung angeordnet.

Hierdurch erhält man entsprechend zwei Temperaturmesswerte. Mit dem Temperaturmesswert der vorderen Temperaturmesseinrichtung lässt sich vorzugsweise die Kühlleistung steuern. Mit dem Temperaturmesswert der hinteren Temperaturmesseinrichtung lässt sich vorzugsweise überprüfen, ob die Temperatur der Behälter ausreichend niedrig ist, also auch ob die Kühlleistung der Kühlvorrichtung hoch genug ist.

Bei einer vorteilhaften Weiterbildung der Erfindung weist die Vorrichtung eine Steuer- und/oder Regeleinrichtung auf. Die Steuer- und/oder Regeleinrichtung ist vorzugsweise mit der Kühlvorrichtung und/oder der Temperaturmesseinrichtung bzw. den Temperaturmesseinrichtungen verbunden, respektive verbindbar ausgebildet. Vorzugsweise ist die Steuer- und/oder Regeleinrichtung dazu ausgebildet, eine Kühlleistung der Kühlvorrichtung basierend auf der von der Temperaturmesseinrichtung bzw. den Temperaturmesseinrichtungen gemessenen Temperatur bzw. Temperaturen zu steuern, respektive zu regeln.

Hier kann somit ein Steuer- bzw. Regelkreis erreicht werden, bei dem die Kühlleistung der Kühlvorrichtung gesteuert oder geregelt wird.

Gemäß einer vorteilhaften Weiterbildung ist die Steuer- und/oder Regeleinrichtung dazu ausgebildet, die Kühlleistung basierend auf der von der vorderen Temperaturmesseinrichtung gemessenen Temperatur zu steuern und basierend auf der von der hinteren Temperaturmesseinrichtung gemessenen Temperatur zu kontrollieren und/oder zu regeln.

Dabei erfolgt ein Verändern der Kühlleistung insbesondere durch ein Verändern der Temperatur des Kühlmediums und/oder des Massenstroms des Kühlmediums.

Gemäß einer vorteilhaften Weiterbildung der Erfindung weist die Vorrichtung eine Ausschleus-Einrichtung auf. Die Ausschleus-Einrichtung ist dazu ausgebildet, Behälter auszusortieren. Insbesondere ist die Ausschleus-Einrichtung dazu ausgebildet, Behälter auszusortieren, bei denen die Temperaturmesseinrichtung, insbesondere die hintere Temperaturmesseinrichtung, eine Temperatur gemessen hat, die von einem Sollwert abweicht. Die Ausschleus-Einrichtung kann dazu ausgebildet sein, , Behälter auszusortieren, bei denen die Temperaturmesseinrichtung, insbesondere die hintere Temperaturmesseinrichtung, eine Temperatur gemessen hat, einen Sollwert übersteigt.

Dabei ist der maximale Sollwert ein Temperaturwert, bei dem der Behälter bzw. der für den Behälter verwendete thermoplastische Kunststoff eine ausreichende Stabilität aufweist. Beispielsweise ist der Sollwert ein Wert zwischen 50 °C und 60 °C, insbesondere ist der Sollwert in etwa 55 °C.

Durch die Ausschleus-Einrichtung wird sichergestellt, dass keine Behälter weiterverarbeitet werden, bei denen es zu Spannungsrissen, insbesondere im Behälterboden, kommen könnte. So kann eine Verunreinigung der Lagerbestände verhindert werden. Selbstverständlich wäre es auch denkbar, auf eine integrierte Ausschleus-Einrichtung zu verzichten. Dann würde ein Abfüllen der Behälter erst erfolgen, wenn mittels der Temperaturmesseinrichtung sichergestellt worden ist, dass die Kühlvorrichtung ausreichend kühlt.

Bei einer vorteilhaften Weiterbildung der Erfindung ist die Kühlvorrichtung als Sprüheinrichtung ausgebildet. Die Sprüheinrichtung ist dazu ausgebildet, die Behälter mit einem flüssigen Kühlmedium insbesondere über wenigstens eine Sprühdüse in zerstäubter Form oder als Aerosol und/oder einem Schwallstrahl zu beaufschlagen.

Vorzugsweise ist die Sprüheinrichtung derart angeordnet, dass das flüssige Kühlmedium insbesondere in Bereichen großer Materialstärke, beispielsweise im Bereich des Behälterbodens aufgebracht wird. Durch diese Maßnahme trägt die Erfindung dem Umstand Rechnung, dass die angesprochenen Bereiche großer Materialstärke besonders abgekühlt werden müssen, weil durch eine dortige Anhäufung des Kunststoffs und aufgrund dessen schlechter Wärmeleitung ansonsten in diesen Bereichen Temperaturspitzen beobachtet werden, die eine unmittelbar daran anschließende Befüllung der Befüllung der Behälter nicht erlauben.

Insbesondere ist die Sprüheinrichtung dazu ausgebildet, die Bereiche großer Materialstärke, insbesondere den Behälterboden, gezielt bzw. direkt abzukühlen, wohingegen die übrigen Bereiche des Behälters auch ohne gezielte bzw. direkte Abkühlung ausreichend gekühlt werden. Insbesondere werden die übrigen Bereiche durch den Transfer als solchen ausreichend gekühlt, und zwar durch die direkte Wärmeabstrahlung oder infolge von Konvektion mit der Umgebungsluft.

Ganz allgemein wäre es denkbar, dass es sich bei den Bereichen großer Materialstärke nicht einschränkend um den Bodenbereich handelt. Beispielsweise kann es sich auch um den Mündungsbereich des Behälters, an dem die obere Behälteröffnung angeordnet ist, handeln. Entsprechend wäre es bei einer alternativen Ausführungsform denkbar, dort die Temperatur zu messen.

Im Allgemeinen setzt sich das Aerosol aus einem Gas und einer darin fein zerstäubten Flüssigkeit zusammen. Bei dem Gas handelt es sich in der Regel um Luft. In der im Allgemeinen unter Druck stehenden Luft wird nun die Flüssigkeit, insbesondere Wasser, zu Tröpfchen fein zerstäubt. Die im Aerosol vorhandene Flüssigkeit lässt sich nun vorteilhaft zur Verdunstungskühlung des Behälters einsetzen. Die fein zerstäubten Tröpfchen aus der Flüssigkeit bilden nach ihrem Aufbringen auf dem Behälter einen dünnen Flüssigkeitsfilm. Dieser Flüssigkeitsfilm verdunstet dadurch, dass der Behälter als Träger über eine erhöhte Temperatur verfügt. Gleichzeitig kühlt sich der Behälter hierbei ab.

Da sich der Behälter primär in den Bereichen abkühlt, in denen der Flüssigkeitsfilm vorhanden ist, lässt sich durch ein geeignetes Anordnen der Sprüheinrichtung die Kühlwirkung der Kühlvorrichtung entsprechend positiv beeinflussen.

Besonders bevorzugt weist die Kühlvorrichtung eine Vielzahl von Sprüheinrichtungen auf. Hierdurch ist eine mehrfache Beaufschlagung des Behälters mit Kühlmedium während seines Transfers möglich. So kann eine deutliche Temperaturerniedrigung bereits nach wenigen Sekunden erreicht werden. In der Regel wird eine ausreichende Temperaturerniedrigung bereits innerhalb einer Zeitspanne von weniger als 10 Sekunden, vorzugsweise weniger als 5 Sekunden erreicht. Die Kühlleistung der Kühlvorrichtung kann dann auch beispielsweise dadurch gesteuert werden, dass die Anzahl der arbeitenden Sprüheinrichtungen variiert wird.

Gemäß einer vorteilhaften Weiterbildung der Erfindung weist die Transferstrecke eine Vielzahl von Transportsterne auf. Die Transportsterne sind dazu ausgebildet, die Behälter hängend gehalten zu transportieren.

Vorzugsweise sind die Behälter an den Transportsternen jeweils im Bereich ihrer oberen Behälteröffnung bzw. Behältermündung an einem Mündungsflansch hängend gehalten. Insbesondere besteht die Transferstrecke aufgrund der Transportsterne aus einer Vielzahl von kreisbogenförmigen Streckenbereichen.

Vorzugsweise ist die Temperaturmesseinrichtung bzw. sind die Temperaturmesseinrichtungen an Transportsternen angeordnet. Unabhängig davon ist vorzugsweise die Kühlvorrichtung an einem Transportstern angeordnet.

Insbesondere ist die vordere Temperaturmesseinrichtung an einem ersten Transportstern, die Kühlvorrichtung an einem zweiten Transportstern, und die hintere Temperaturmesseinrichtung an einem dritten Transportstern angeordnet. So wird erreicht, dass einfach die Temperatur vor und nach dem Abkühlen der Behälter gemessen werden kann.

Ganz allgemein können selbstverständlich mehrere Transportsterne mit Kühlvorrichtungen vorgesehen sein.

Bei einer vorteilhaften Weiterbildung der Erfindung ist die Sprüheinrichtung unterhalb der Behälter angeordnet.

So können, die Bereiche großer Materialstärke, insbesondere den Behälterboden, gezielt bzw. direkt abgekühlt werden.

Gemäß einer vorteilhaften Weiterbildung der Erfindung bilden die Blasformmaschine und die Füllmaschine inklusive der zwischengeschalteten Transferstrecke eine Baueinheit aus. Mit anderen Worten ist eine Kombimaschine ausgebildet, die die Blasformmaschine, die Füllmaschine und die Transferstrecke aufweist.

So hat es sich als besonders vorteilhaft erwiesen, wenn die Herstellung des Behälters und dessen Befüllung unmittelbar aneinander anschließen, also eine kombinierte Herstellung und Abfüllung erfolgt, indem die Blasformmaschine und die Füllmaschine eine Baueinheit bilden. In diesem Fall werden die Behälter zwischen der Blasformmaschine und der Füllmaschine durch die Transferstrecke geführt, die ebenfalls integraler Bestandteil der Baueinheit ist. Insgesamt wird hierdurch eine platzsparende und kostengünstige Ausgestaltung zur Verfügung gestellt. Zudem erübrigen sich Reinigungsprozeduren, die dann erforderlich sind, wenn ein längerer Transportweg oder auch eine Lagerung der hergestellten Behälter nach ihrer Produktion und vor der Befüllung erforderlich ist.

Gerade bei einer solchen Kombimaschine ist eine besonders effektive und ausreichende Kühlung der Behälter nötig und wichtig.

### Kurze Beschreibung der Zeichnungen

Die oben beschriebenen, unterschiedlichen und beispielhaften Merkmale können erfindungsgemäß miteinander kombiniert werden, soweit dies technisch sinnvoll und geeignet ist. Weitere Merkmale, Vorteile und Ausführungsformen der Erfindung ergeben sich aus der nachfolgenden Beschreibung von Ausführungsbeispielen und anhand der Figuren.

Die zur Erläuterung der Ausführungsbeispiele verwendeten Figuren zeigen:
- Fig. 1: in schematischer Darstellung und in Draufsicht eine Vorrichtung zum Herstellen und Abfüllen von Behältern; und
- Fig. 2: in vereinfachter Darstellung eine vertikale Ansicht eines an einem Transportstern gehaltenen Behälters.

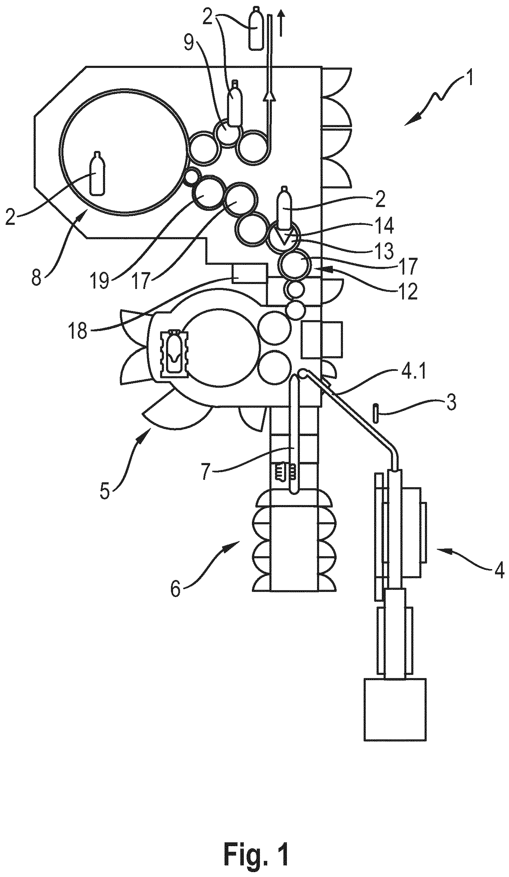

Das Verfahren zum Herstellen von Behältern 2 wird mittels einer Vorrichtung zum Herstellen von Behältern durchgeführt, die im Folgenden gemäß Fig. 1 in ihrer Gesamtheit mit dem Bezugszeichen 1 bezeichnet wird. Bei den Behältern 2 handelt es sich um aus thermoplastischem Kunststoff, vorzugsweise aus PET, bestehenden Flaschen 2. Daher werden die Behälter 2 im Folgenden auch als Flaschen 2 bezeichnet.

Die Flaschen 2 werden in der Vorrichtung 1 aus Vorformlingen 3 durch Blasformen hergestellt. Anschließend werden die Flaschen 2 mit einem flüssigen Produkt gefüllt. Insbesondere erfolgt das Füllen hierbei als Druckfüllen.

Die Vorrichtung 1 weist eine Versorgungseinheit 4 zum Bereitstellen der Vorformlinge 3 auf. Die Versorgungseinheit 4 weist hierzu eine Förderstrecke 4.1 auf, über die die Vorformlinge 3 zugeführt werden.

Ferner weist die Vorrichtung 1 eine Blasformmaschine 5 zum Herstellen der Flaschen 2 auf. Bei der in dem Beispiel gezeigten Blasformmaschine 5 handelt es sich um eine Blasformmaschine 5 umlaufender Bauart, die eine dem Fachmann bekannte Ausbildung aufweist und der ein Ofen 6 mit Vorheizstrecke 7 zugeordnet ist.

Weiterhin weist die Vorrichtung 1 eine Füllmaschine 8 zum Befüllen der hergestellten Flaschen 2 mit dem flüssigen Produkt auf. Bei der gezeigten Füllmaschine 8 handelt es sich exemplarisch um eine Füllmaschine 8 umlaufender Bauart, die eine dem Fachmann bekannte Ausbildung aufweist und an einem um eine vertikale Maschinenachse umlaufend angetriebenen Rotor eine Vielzahl von Füllstellen besitzt.

Ferner weist die in Fig. 1 gezeigte Vorrichtung 1 eine sich in Transportrichtung der Flaschen 2 durch die Vorrichtung 1 an die Füllmaschine 8 anschließende Verschließmaschine 9 auf, an der die Flaschen 2 verschlossen werden.

Die Vorformlinge 3 werden über die Förderstrecke 4.1 der Vorheizstrecke 7 zugeführt, in der die Vorformlinge 3 vorerhitzt und in diesem Zustand einem Einlauf der Blasformmaschine 5 zugeführt werden. Die in der Blasformmaschine 5 hergestellten leeren Flaschen 2 werden über eine Transferstrecke, die in der Fig. 1 ganz allgemein mit 12 bezeichnet ist, von der Blasformmaschine 5 zu der Füllmaschine 8 gefördert.

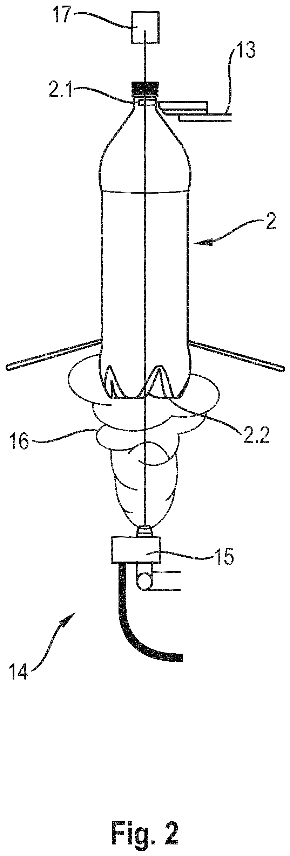

Es ist erkennbar, dass die Transferstrecke 12 eine Vielzahl von Transportsternen 13 aufweist. Die Transportsterne 13 sind bezogen auf die Transportrichtung der Flaschen 2 aneinander anschließend ausgebildet und dazu ausgebildet, die Flaschen 2 hängend gehalten zu transportieren. Im Einzelnen sind die Flaschen 2 an den Transportsternen 13 jeweils im Bereich ihrer oberen Flaschenöffnung oder Mündung 2.1 hängend gehalten (siehe auch Fig. 2).

Die durch Blasformen unter Erhitzen hergestellten leeren Flaschen 2 besitzen bei der Übergabe an die Transferstrecke 12 eine Temperatur von mindestens 70, üblicherweise 75 °C bis 80 °C. Insbesondere besitzen die Flaschen 2 an ihrem eine vergrößerte Wandstärke aufweisenden Flaschenboden 2.2 derartig hohe Temperaturen. Das führt dazu, dass vor dem Abfüllen in der Füllmaschine 8 auf jeden Fall ein Abkühlen der Flaschen 2 auf eine Temperatur notwendig ist, bei der der für die Flaschen 2 verwendete thermoplastische Kunststoff eine ausreichende Stabilität aufweist. Beispielsweise muss hierfür eine Temperatur von 55 °C oder niedriger erreicht werden.

Hierzu weist die Transferstrecke 12 eine Kühlvorrichtung 14 zum Abkühlen der hergestellten Behälter 2 auf. Insbesondere ist an der Transferstrecke 12 bzw. unter wenigstens einem der Transportsterne 13 und somit unterhalb der Bewegungsbahn der leeren Flaschen 2, wie in Fig. 2 erkennbar, die Kühleinrichtung 14 zum Abkühlen der hergestellten Behälter angeordnet.

Wie in Fig. 2 zu erkennen, weist die Kühlvorrichtung 14 eine Sprüheinrichtung 15 auf. Die Sprüheinrichtung 15 ist dazu ausgebildet, die Behälter 2 mit einem flüssigen Kühlmedium zu beaufschlagen. Dabei wird das flüssige Kühlmedium 16 fein verteilt bzw. zerstäubt, insbesondere als Aerosol, von unten her auf die Flasche 2 und dabei insbesondere auch auf den Flaschenboden 2.2 aufgebracht. Die von der Sprüheinrichtung 15 erkennbare Sprühdüse kann auch als Zerstäuberdüse ausgeführt sein, der einerseits das flüssige Kühlmedium 16, beispielsweise Wasser, und andererseits ein Gas unter Druck zugeführt wird. So lässt sich das auf die Unterseite, also auf die Flaschenböden 2.2 der Flaschen 2 gerichtete Kühlmedium als Aerosol auftragen.

Zurückkommend auf Fig. 1 ist erkennbar, dass die Transferstrecke 12 zwei Temperaturmesseinrichtungen 17 zum Messen der Temperatur der Behälter 2 aufweist. Insbesondere ist eine vordere Temperaturmesseinrichtung 17 in Transportrichtung der Flaschen 2 vor der Kühlvorrichtung 14, und eine hintere Temperaturmesseinrichtung 17 in Transportrichtung der Flaschen 2 hinter der Kühlvorrichtung 14 angeordnet. Selbstverständlich wäre es auch denkbar, dass lediglich eine der beiden Temperaturmesseinrichtungen 17, vorzugsweise die hintere Temperaturmesseinrichtung 17 vorgesehen ist.

In Fig. 2 ist auch die Funktion der Temperaturmesseinrichtung 17 entnehmbar. Hierbei ist darauf hinzuweisen, dass üblicherweise und anders als in Fig. 2 dargestellt, die Temperaturmesseinrichtung 17 und die Kühlvorrichtung 14 nicht an einem gemeinsamen Transportstern 13 angeordnet sind. Der Einfachheit halber wurde dies jedoch in Fig. 2 zur Erläuterung beider Aspekte entsprechend dargestellt.

Die in Fig. 2 gezeigte Temperaturmesseinrichtung 17 dient insbesondere zum Messen der Temperatur an einer Innenwandung des Behälterbodens 2.2. Hierzu ist die Temperaturmesseinrichtung 17 als Pyrometer ausgebildet und dazu geeignet, die Temperatur der Innenwandung des Behälterbodens 2.2 durch die obere Behälteröffnung, insbesondere Flaschenmündung 2.1 hindurch zu messen. Die Temperaturmesseinrichtung 17 ist hierzu also über der Transferstrecke 12 angeordnet.

Zurückkommende auf Fig. 1 ist ebenfalls erkennbar, dass die Vorrichtung eine Steuer- und/oder Regeleinrichtung 18 aufweist. Die Steuer- und/oder Regeleinrichtung 18 ist mit der Kühlvorrichtung 14 und den Temperaturmesseinrichtungen 17 verbunden ausgebildet. Das bedeutet, dass die Steuer- und/oder Regeleinrichtung 18 Messwerte von den Temperaturmesseinrichtungen 17 empfangen kann. Ferner ist die Steuer- und/oder Regeleinrichtung 18 dazu ausgebildet, eine Kühlleistung der Kühlvorrichtung 14 basierend auf den von den Temperaturmesseinrichtungen 17 gemessenen Temperaturen bzw. empfangenen Temperaturmesswerten zu steuern, respektive zu regeln.

Lediglich beispielsweise kann die Steuer- und/oder Regeleinrichtung 18 dazu ausgebildet sein, die Kühlleistung basierend auf der von der vorderen Temperaturmesseinrichtung 17 gemessenen Temperatur zunächst zu steuern, d. h. vorzugeben. Dann kann die vorgegebene Kühlleistung mittels der hinteren Temperaturmesseinrichtung 17 dahingehend kontrolliert werden, ob die Temperatur der Flasche 2 ausreichend verringert worden ist. Wenn mittels der hinteren Temperaturmesseinrichtung 17 festgestellt wird, dass die Temperatur nicht ausreichend verringert worden ist, kann wiederum mittels der Steuer- und/oder Regeleinrichtung die Kühlleistung entsprechend angepasst werden. So lässt sich ein Steuer- und/oder Regelprozess ausbilden.

Die Vorrichtung 1 kann ferner eine optionale Ausschleus-Einrichtung 19 aufweisen. Die Ausschleus-Einrichtung 19 ist dazu ausgebildet, Flaschen 2 auszusortieren, bei denen die hintere Temperaturmesseinrichtung 17 eine Temperatur gemessen hat, die einen maximalen Sollwert übersteigt. Hierzu kann die Ausschleus-Einrichtung 19 ebenfalls mit der Steuer- und/oder Regeleinrichtung 18 verbunden ausgebildet sein.

Insgesamt ergibt sich mit der in Fig. 1 gezeigten Vorrichtung eine Kombimaschine, die die Blasformmaschine 5, die Füllmaschine 8 und die zwischengeschaltete Transferstrecke 12 als eine Baueinheit aufweist.

Mittels dieser Kombimaschine lässt sich somit ein Verfahren zum Herstellen und Abfüllen von Behältern 2 durchführen. Das Verfahren weist einen Schritt zum Herstellen der Behälter 2 durch Blasformen in der Blasformmaschine 5 auf. Ferner weist das Verfahren einen Schritt zum Abkühlen der Behälter 2 auf der Transferstrecke 12 mittels der Kühlvorrichtung 14 auf. Weiterhin weist das Verfahren einen Schritt zum Messen der Temperatur der Behälter 2 vor dem Abkühlen der Behälter 2 und nach dem Abkühlen der Behälter 2 auf.

Es versteht sich, dass bei der vorliegenden Erfindung ein Zusammenhang zwischen einerseits Merkmalen besteht, die im Zusammenhang mit Verfahrensschritten beschrieben wurden, sowie andererseits Merkmalen, die im Zusammenhang mit entsprechenden Vorrichtungen beschrieben wurden. Somit sind beschriebene Verfahrensmerkmale auch als zur Erfindung gehörige Vorrichtungsmerkmale - und umgekehrt - anzusehen, selbst wenn dies nicht explizit erwähnt wurde.

Es ist festzuhalten, dass die unter Bezug auf einzelne Ausführungsformen bzw. -varianten beschriebenen Merkmale der Erfindung, wie beispielsweise Art und Ausgestaltung der einzelnen Komponenten sowie deren genaue Dimensionierung und räumliche Anordnung auch bei anderen Ausführungsformen vorhanden sein können, außer wenn es anders angegeben ist oder sich aus technischen Gründen von selbst verbietet. Von derartigen, in Kombination beschriebenen Merkmalen einzelner Ausführungsformen müssen außerdem nicht notwendigerweise alle Merkmale in einer betreffenden Ausführungsform realisiert sein.

### Bezugszeichen

- 1: Vorrichtung
- 2: Behälter / Flaschen
- 2.1: Flaschenmündung / Behältermündung
- 2.2: Flaschenboden / Behälterboden
- 3: Vorformlinge
- 4: Versorgungseinheit
- 4.1: Förderstrecke
- 5: Blasformmaschine
- 6: Ofen
- 7: Vorheizstrecke
- 8: Füllmaschine
- 9: Verschließmaschine
- 12: Transferstrecke
- 13: Transportsterne
- 14: Kühleinrichtung
- 15: Sprüheinrichtung
- 16: Kühlmedium
- 17: Temperaturmesseinrichtungen
- 18: Steuer- oder Regeleinrichtung
- 19: Ausschleus-Einrichtung

## Patentansprüche

1. Verfahren zum Herstellen und vorzugsweise Abfüllen von Behältern (2), insbesondere Flaschen, aus thermoplastischem Kunststoff, wobei das Verfahren folgende Schritte aufweist:
Herstellen der Behälter (2) durch Blasformen,
Abkühlen der Behälter (2), insbesondere durch Beaufschlagung an ihrer Behälteraußenseite mit einem insbesondere flüssigen Kühlmedium (16),
**dadurch gekennzeichnet, dass** das Verfahren folgende Schritte aufweist:
Messen der Temperatur der Behälter (2), insbesondere der Temperatur an einer Innenwandung des Behälterbodens (2.2), nach dem Abkühlen der Behälter (2).

2. Verfahren nach Anspruch 1, wobei das Verfahren folgenden Schritt aufweist: Messen der Temperatur der Behälter (2), insbesondere der Temperatur an einer Innenwandung des Behälterbodens (2.2), vor dem Abkühlen der Behälter (2).

3. Verfahren nach Anspruch 1 oder 2, wobei das Verfahren folgenden Schritt aufweist: Anpassen der Temperatur und/oder des Massestroms des Kühlmediums (16) basierend auf der beim Messen der Temperatur gemessenen Temperatur.

4. Verfahren nach einem der vorherigen Ansprüche, wobei das Verfahren folgenden Schritt aufweist: Befüllen der Behälter (2) mit einem insbesondere flüssigen Produkt, wobei das Abkühlen während eines Transfers von einer Blasformmaschine (5) zum Herstellen der Behälter (2) zu einer Füllmaschine (8) zum Befüllen der Behälter (2) erfolgt.

5. Vorrichtung (1) zum Herstellen und vorzugsweise Abfüllen, insbesondere kombiniertem Herstellen und Abfüllen, von Behältern (2), insbesondere Flaschen, aus thermoplastischem Kunststoff, vorzugsweise zur Durchführung des Verfahrens nach einem der Ansprüche 1 bis 4, wobei die Vorrichtung (1) Folgendes aufweist:
eine Blasformmaschine (5) zum Herstellen von Behältern (2),
eine Füllmaschine (8) zum Befüllen der hergestellten Behälter (2) mit einem insbesondere flüssigen Produkt, und
eine Transferstrecke (12) zwischen der Blasformmaschine (5) und der Füllmaschine (8), wobei die Transferstrecke (12) Folgendes aufweist:
zumindest eine Kühlvorrichtung (14) zum Abkühlen des hergestellten Behälters (2),
zumindest eine Temperaturmesseinrichtung (17) zum Messen der Temperatur der Behälter (2), insbesondere an einer Innenwandung des Behälterbodens (2.2).

6. Vorrichtung (1) nach Anspruch 5, wobei die Temperaturmesseinrichtung (17) ein Pyrometer aufweist.

7. Vorrichtung (1) nach Anspruch 5 oder 6, wobei die Temperaturmesseinrichtung (17) über den auf der Transferstrecke (12) transportierten Behältern (2) angeordnet ist, so dass durch eine Behältermündung (2.1), insbesondere Flaschenmündung, hindurch die Temperatur der Innenwandung des Behälterbodens (2.2) messbar ist.

8. Vorrichtung (1) nach einem der Ansprüche 5 bis 7, wobei die Transferstrecke (12) zumindest zwei Temperaturmesseinrichtungen (17) aufweist, wobei eine vordere Temperaturmesseinrichtung (17) vor der Kühlvorrichtung (14) und eine hintere Temperaturmesseinrichtung (17) hinter der Kühlvorrichtung (14) angeordnet ist.

9. Vorrichtung (1) nach einem der Ansprüche 5 bis 8, wobei die Vorrichtung (1) eine Steuer- und/oder Regeleinrichtung (18) aufweist, die mit der Kühlvorrichtung (14) und/oder der Temperaturmesseinrichtung (17) verbunden respektive verbindbar ausgebildet ist, und dazu ausgebildet ist, eine Kühlleistung der Kühlvorrichtung (14) basierend auf der von der Temperaturmesseinrichtung (17) gemessenen Temperatur zu steuern respektive zu regeln.

10. Vorrichtung (1) nach Anspruch 8 und 9, wobei die Steuer- und/oder Regeleinrichtung (18) dazu ausgebildet ist, die Kühlleistung basierend auf der von der vorderen Temperaturmesseinrichtung (17) gemessenen Temperatur zu steuern und basierend auf der von der hinteren Temperaturmesseinrichtung (17) gemessenen Temperatur zu kontrollieren und/oder zu regeln.

11. Vorrichtung (1) nach einem der Ansprüche 5 bis 10, wobei die Vorrichtung (1) eine Ausschleus-Einrichtung (19) aufweist, die dazu ausgebildet ist, Behälter (2) auszusortieren, bei denen die Temperaturmesseinrichtung (17) eine Temperatur gemessen hat, von einem Sollwert abweicht.

12. Vorrichtung (1) nach einem der Ansprüche 5 bis 11, wobei die Kühlvorrichtung (14) eine Sprüheinrichtung (15) aufweist, die dazu ausgebildet ist, die Behälter (2) mit einem flüssigen Kühlmedium (16) über wenigstens eine Sprühdüse in zerstäubter Form oder als Aerosol und/oder mit einem Schwallstrahl zu beaufschlagen.

13. Vorrichtung nach Anspruch 12, wobei die Transferstrecke (12) eine Vielzahl von Transportsternen (13) aufweist, die dazu ausgebildet sind, die Behälter (2) hängend gehalten zu transportieren.

14. Vorrichtung nach Anspruch 12 oder 13, wobei die Sprüheinrichtung (15) unterhalb der Behälter (2) angeordnet ist.

15. Vorrichtung nach einem der Ansprüche 5 bis 14, **dadurch gekennzeichnet, dass** die Blasformmaschine (5) und die Füllmaschine (8) inklusive der zwischengeschalteten Transferstrecke (12) eine Baueinheit und folglich eine Kombimaschine bilden.
